# EUROPEAN PATENT APPLICATION

(11) **EP 1 087 629 A1**
(43) Date of publication of application: **28.03.2001**
(21) Application number: 00911422.4
(22) Date of filing: 28.03.2000
(51) Int. Cl.: H04Q 7/36

(54) **CDMA BASE STATION DEVICE AND CDMA COMMUNICATION METHOD**

(30) Priority: 01.04.1999 JP 9502999
(71) Applicant: MATSUSHITA ELECTRIC INDUSTRIAL CO., LTD., Kadoma-shi, Osaka 571-8501 (JP)
(72) Inventor: NAKANO, Takayuki, Yokosuka-shi, Kanagawa 239-0842 (JP)
(74) Representative: Grünecker, Kinkeldey, Stockmair & Schwanhäusser Anwaltssozietät
(86) International application number: JP0001909
(87) International publication number: WO0060889

(57) **Abstract**

A path intensity measuring part 213 of a mobile station device 201 measures the path intensity of a downlink signal, and a multiplexing part 214 carries information on the path intensity on an uplink signal for transmission to a base station device 101. A path intensity extraction part 161 of the base station device 101 extracts information on the path intensity on carried on an uplink signal; a spreading ratio decision part 171 decides the spreading ratio of a downlink signal, based on information on the path intensity; a slot decision part 181 decides the time slot of a downlink signal, based on the spreading ratio; and a spreading code decision part 191 decides a spreading code, based on the spreading ratios and the time slots. Thereby, the channel capacity may be increased, while necessary and sufficient receiving quality is kept under controlled interference between users.

## Description

### Technical Field

The present invention relates to a CDMA base station device in a communication system using a CDMA method, and the same method.

### Background Art

In cellular systems such as car and portable telephones, techniques for effective use of frequencies to secure more subscriber lines within a limited frequency band have become very important in recent years.

A CDMA (code division multiple access) method has attracted interest as one of multiple access methods with effective use of frequencies. The CDMA method may realize excellent communication qualities by the wideband features and high correlation characteristics through a pseudo-random noise code sequence and so on.

A mobile communication system for land use using the CDMA method has been disclosed in, for example, U.S. Patent No.4,901,307. There is the Direct Sequence method in which a transmitted signal is multiplied by a code sequence (hereinafter, called as "spreading codes") such as a pseudo-random noise code sequence, as one of the CDMA methods.

Signal flows on downlinks transmitted to communication terminal devices from a conventional CDMA base station device (hereinafter, called as "base station device") will be described below.

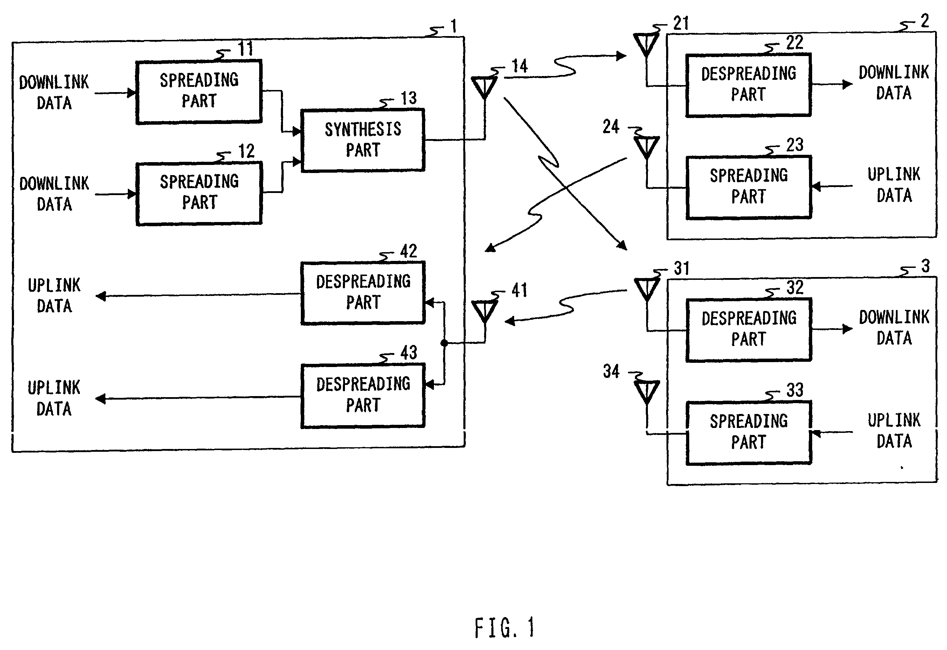

FIG. 1 shows block diagrams of configurations of a conventional base station device and communication terminal devices. In the first place, signal flows on downlinks in a conventional CDMA communication device will be described, referring to FIG. 1.

A downlink signal transmitted from a base station device 1 to a communication terminal device 2 is multiplied by a proper spreading code in a spreading part 11. Similarly, a downlink signal transmitted from the base station device 1 to a communication terminal device 3 is multiplied by a proper spreading code in a spreading part 12. Each downlink signal after spreading is synthesized at a synthesis part 13 to be transmitted by wireless to a transmitting antenna 14.

In a despreading part 22, the synthesized signal received at a receiving antenna 21 of the communication terminal device 2 is multiplied by the same spreading code as the code, which has been used for the multiplication at the spreading part 11, and a downlink signal to the communication terminal device 2 is extracted. Similarly, in a despreading part 32, the synthesized signal received at a receiving antenna 31 of the communication terminal device 3 is multiplied by the same spreading code as the code, which has been used for the multiplication at the spreading part 12, and a downlink signal to the communication terminal device 3 is extracted.

Then, signal flows on uplinks transmitted from conventional communication terminal devices to the base station device will be described, referring to FIG. 1.

An uplink signal from the communication terminal device 2 is multiplied by a proper spreading code in a spreading part 23 to be transmitted by wireless from a transmitting antenna 24. Similarly, an uplink signal from the communication terminal device 3 is multiplied by a proper spreading code in a spreading part 33 to be transmitted by wireless from a transmitting antenna 34.

At a despreading part 42, a signal received at a receiving antenna 41 of the base station device 1 is multiplied by the same spreading code as the code, which has been used for the multiplication at the spreading part 23, and an uplink signal from the communication terminal device 2 is extracted, and, at a despreading part 43, is multiplied by the same spreading code as the code, which has been used for the multiplication at the spreading part 33, and an uplink signal from the communication terminal device 3 is extracted.

FIG. 1 shows the case where the base station device 1 performs simultaneous wireless communications with two communication terminal devices 2 and 3. But, in general, the base station device is provided with the same number of spreading parts and despreading parts, as that of communication terminal devices provided for simultaneous wireless communication, according to the system capacity.

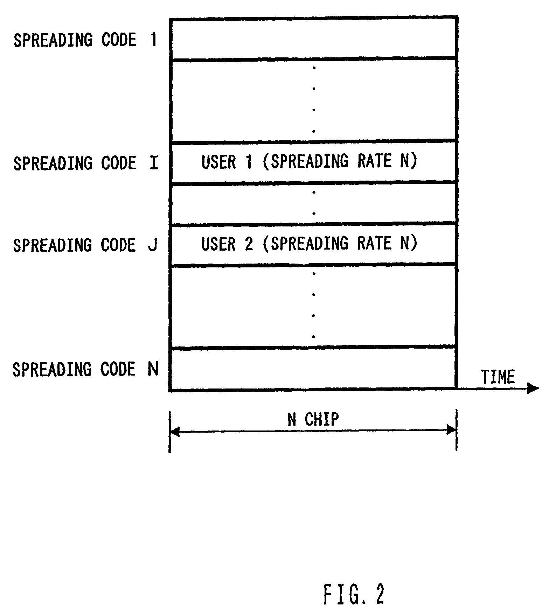

Now, as a bad propagation environment causes weak receiving path intensity, it is required to increase a spreading ratio in order to obtain necessary and sufficient receiving quality. In a conventional CDMA communication device, fixed setting of spreading ratios is performed so as to obtain necessary and sufficient receiving quality even in case of weak receiving path intensity under a bad propagation environment. As shown in FIG. 2, any one of previously predetermined spreading codes is assigned to each user, for example, a spreading code I to a user 1, and a spreading code J to a user 2.

However, in the conventional CDMA base station device, one spreading code is independently assigned even to users under good propagation environments, as fixed predetermined setting of the spreading ratios has been performed. Therefore, the number of spreading codes to be used is increased in proportion to the number of users communicating with each other at the same time. Then, there is a problem that deteriorated receiving quality is caused by more interference between users along with the increased number of the users,

### Disclosure of Invention

The object of the present invention is to offer a CDMA base station device and a CDMA method, by which channel capacity may be increased while necessary and sufficient receiving quality is kept by controlling the interference between users.

The above object is realized by controlling, based on the receiving path intensity of a downlink and so on, a spreading ratio and a time slot of a spreading code by which a downlink transmitting signal is multiplied.

### Brief Description of Drawings

FIG. 1 shows block diagrams of configurations of a conventional base station device and communication terminal devices;
FIG. 2 shows a view of a conventional assigning method of spreading codes;
FIG. 3 shows block diagrams of configurations of a base station device and communication terminal devices according to an embodiment 1 of the present invention;
FIG. 4 shows a view of an assigning method of spreading codes according to an embodiment 1 of the present invention;
FIG. 5 shows block diagrams of configurations of a base station device and communication terminal devices according to an embodiment 2 of the present invention;
FIG. 6 is block diagrams of configurations of a base station device and communication terminal devices according to an embodiment 3 of the present invention; and
FIG. 7 shows block diagrams of configurations of a base station device and communication terminal devices according to an embodiment 4 of the present invention.

### Best Mode for Carrying Out the Invention as for the invention.

Hereinafter, embodiments according to the present invention will be described in detail, referring to attached drawings.

### (Embodiment 1)

In an embodiment 1, a communication terminal device measures receiving path intensity to report the measured result to a base station device; and the base station device determines a spreading ratio of a downlink signal and so on, based on the reported receiving path intensity.

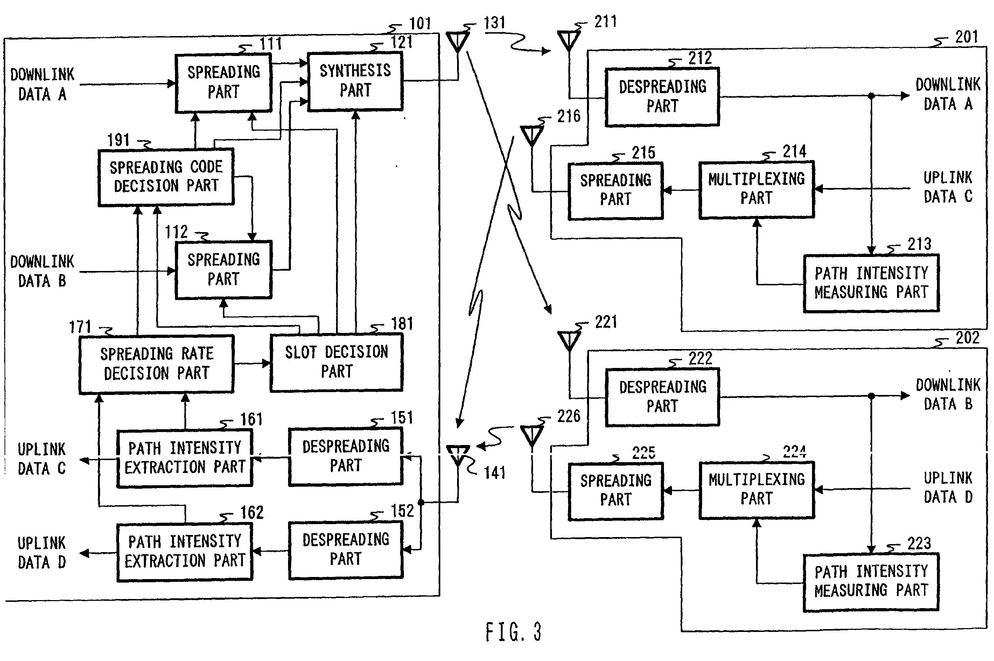

FIG. 3 shows block diagrams of configurations of a base station device and communication terminal devices according to the embodiment 1 of the present invention. In the embodiment 1, it is assumed, as shown in block diagrams of FIG. 3, that there are a base station device 101, communication terminal devices 201, and 202, and a case will be described, where the base station device 101 performs simultaneous wireless communication with the communication terminal devices 201 and 202.

In the base station device 101 shown in FIG. 3, a spreading part 111 performs multiplication of a signal to be transmitted to the communication terminal device 201 (hereinafter, called as "downlink signal A") by a proper spreading code A. A spreading part 112 performs multiplication of a signal to be transmitted to the communication terminal device 202 (hereinafter, called as "downlink signal B") by a proper spreading code B. Here, when time slots for multiplication of the spreading codes A and B are different from each other, there may be a case where the spreading codes are the same each other.

A synthesis part 121 synthesizes signals output from the spreading parts 111, and 112, a spreading code decision part 191, and a slot decision part 181 to transmit them by wireless from a transmitting antenna 131.

A despreading part 151 obtains a signal (hereinafter, called as "uplink signal C") transmitted from the communication terminal device 201, after multiplication of a signal received at a receiving antenna 141 by a spreading code C. A despreading part 152 obtains a signal (hereinafter, called as "uplink signal D") transmitted from the communication terminal device 202, after multiplication of a signal received at a receiving antenna 142 by a spreading code D.

A path intensity extraction part 161 extracts information on path intensity carried on the uplink signal C output from the despreading part 151. A path intensity extraction part 162 extracts information on path intensity carried on the uplink signal D output from the despreading part 152.

A spreading ratio decision part 171, decides a spreading ratio of a spreading code for multiplication of the downlink signal A, based on the information on the path intensity output from the path intensity extraction part 161, and determines a spreading ratio of a spreading code for multiplication of the downlink signal B, based on the information on the path intensity output from the path intensity extraction part 162.

The slot decision part 181 decides time slots of the downlink signals A and B, based on the information on the spreading ratio output from the spreading ratio decision part 171, to output them to the spreading parts 111 and 112, and the synthesis part 121, respectively.

The spreading code decision part 191 decides the spreading codes A and B, based on the information on the spreading ratio output from the spreading ratio decision part 171, and information on the time slot output from the slot decision part 181, to output them to the spreading parts 111 and 112, and the synthesis part 121, respectively.

In the communication terminal device 201 of FIG. 3, a despreading part 212 obtains the downlink signal A by multiplication of a signal received at a receiving antenna 211 by the spreading code A. A path intensity measuring part 213 measures path intensity of the downlink signal A output from the despreading part 212.

A multiplexing part 214 multiplexes the information on the path intensity, which is output from the path intensity measuring part 213, over the uplink signal C. A spreading means 215 performs multiplication of the output signal of the multiplexing part 214 by the spreading code C to transmit it by wireless from a transmitting antenna 216.

In the communication terminal device 202 of FIG. 3, a despreading part 222 obtains the downlink signal B by multiplication of a signal received at a receiving antenna 221 by the spreading code B. A path intensity measuring part 223 measures path intensity of the downlink signal B output from the despreading part 222.

A multiplexing part 224 multiplexes the information on the path intensity, which is output from the path intensity measuring part 223, over the uplink signal D. A spreading means 225 performs multiplication of the output signal of the multiplexing part 224 by the spreading code D to transmit it by wireless from a transmitting antenna 226.

Then, signal flows on downlinks in the CDMA communication device according to an embodiment 1 of the present invention will be described, referring to FIG. 3.

Multiplication of the downlink signal A to the communication terminal device 201 by the spreading code A output from the spreading code decision part 191 is performed at the spreading part 111, based on the time slot decided at the slot decision part 181. Similarly, the downlink signal B to the communication terminal device 202 is multiplied by the spreading code B output from the spreading code decision part 191 at the spreading part 112, based on the time slot decided at the slot decision part 181.

The downlink signals A and B after completion of spreading processing are synthesized with signals output from the spreading code decision part 191, and the slot decision part 181 at the synthesis part 121 to be transmitted by wireless from the from the transmitting antenna 131.

The synthesized signal received at the receiving antenna 211 of the communication terminal device 201 is multiplied by the spreading code A at the despreading part 212 for extraction of the downlink signal A. And the received path intensity of the extracted downlink signal A is measured by the path intensity measuring means 213.

Similarly, the synthesized signal received at the receiving antenna 221 of the communication terminal device 202 is multiplied by the spreading code B at the despreading part 222 for extraction of the downlink signal B. And the received path intensity of the extracted downlink signal B is measured by the path intensity measuring means 223.

Then, signal flows on uplinks in the CDMA communication device according to the embodiment 1 of the present invention will be described, referring to FIG. 3.

The multiplexing part 214 multiplexes the information on the path intensity over the uplink signal C from the communication terminal device 201, and the signal C is multiplied by the spreading code C at the spreading part 215 for wireless transmission from the transmission antenna 216. Similarly, the multiplexing part 224 multiplexes the information of the path intensity over the uplink signal D from the communication terminal device 202, and the signal D is multiplied by the spreading code D at the spreading part 225 for wireless transmission of it from the transmission antenna 226.

The signal received at the receiving antenna 141 of the base station device 101 is multiplied by the spreading code C at the despreading part 151 for extraction of the uplink signal C including the information on the path intensity at the communication terminal device 201, and is multiplied by the spreading code D at the despreading part 152 for extraction of the uplink signal D including the information on the path intensity at the communication terminal device 202.

And, the information on the path intensity at the communication terminal device 201 is separated from the uplink signal C at the path intensity extraction part 161, and the information on the path intensity at the device 202 is done from the uplink signal D at the path intensity extraction part 162. Each separated information on the path intensity is input to the spreading ratio decision part 171, at which the spreading ratios of each downlink signal are decided.

And information on the spreading ratios of each downlink signal is input to the slot decision part 181, at which the time slots of each downlink signal are decided. In addition, the information on the spreading ratios and time slots of each downlink signal is input to the spreading code decision part 191, at which the spreading codes of each downlink signal are decided.

Though, FIG. 3 shows a case where the base station device 101 performs simultaneous wireless communication with two communication terminal devices 201, and 202, the present invention does not depend on the number of communication terminal devices performing simultaneous wireless communication with the base station device. In general, the base station device 101 is provided with the same number of spreading parts, despreading parts, and path intensity extraction parts as that of the number of communication terminal devices which are configured to simultaneously communicate with each other by wireless, according to the system capacity.

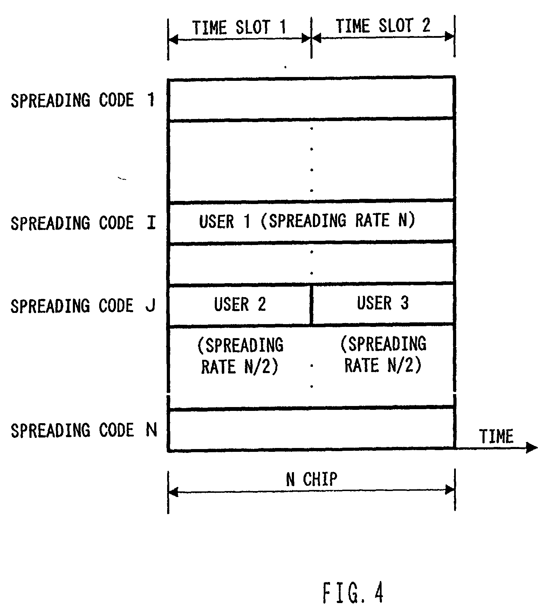

Then, a method to decide the spreading ratio and the time slot of the downlink signal in the CDMA communication device according to the embodiment 1 of the present invention will be described in detail, using FIG. 4 illustrating a spreading code assigning method.

Now, in case of weak receiving path intensity under a bad propagation environment, increased spreading ratios cause necessary and sufficient receiving quality in the wireless communication. On the other hand, in case of a good propagation environment, and strong receiving path intensity, the necessary and sufficient receiving quality may be obtained even by reduced spreading ratios.

Now, it is assumed that decision results by the spreading ratio decision part of the base station device, based on the path intensity extracted at the path intensity extraction part, show that, as the receiving path intensity for a user 1 is weak, spreading is required with a spreading ratio of N for obtaining the necessary and sufficient receiving quality, and that, as users 2 and 3 have strong receiving path intensity, spreading even with a spreading ratio of N/2 causes the necessary and sufficient receiving quality.

In the above case, if the downlink signal of the user 1 is transmitted during all the time slots of the spreading code I; the downlink signal of the user 2 is transmitted during the first half time slot 1 of the time slots of the spreading code J; and the downlink signal of the user 3 is transmitted during the latter half time slot 2 of the time slots of the spreading code J, as shown in FIG. 4, communication with three users may be realized using two spreading codes I and J to increase the system capacity, compared with that of a conventional case.

As mentioned above, the system capacity may be increased in the base station device, while necessary and sufficient receiving quality is kept, by decision of the spreading codes and time slots through reducing the spreading ratios to the very limit securing necessary and sufficient receiving quality, based on the information on the path intensity transmitted from each communication device.

### (Embodiment 2)

In an embodiment 2, the receiving quality is measured in the communication terminal devices, using the bit error rate and the CRC (cyclic redundancy check) method, to report the results to the base station device, where the spreading ratios of the downlink signal and so on are decided, based on the reported receiving quality.

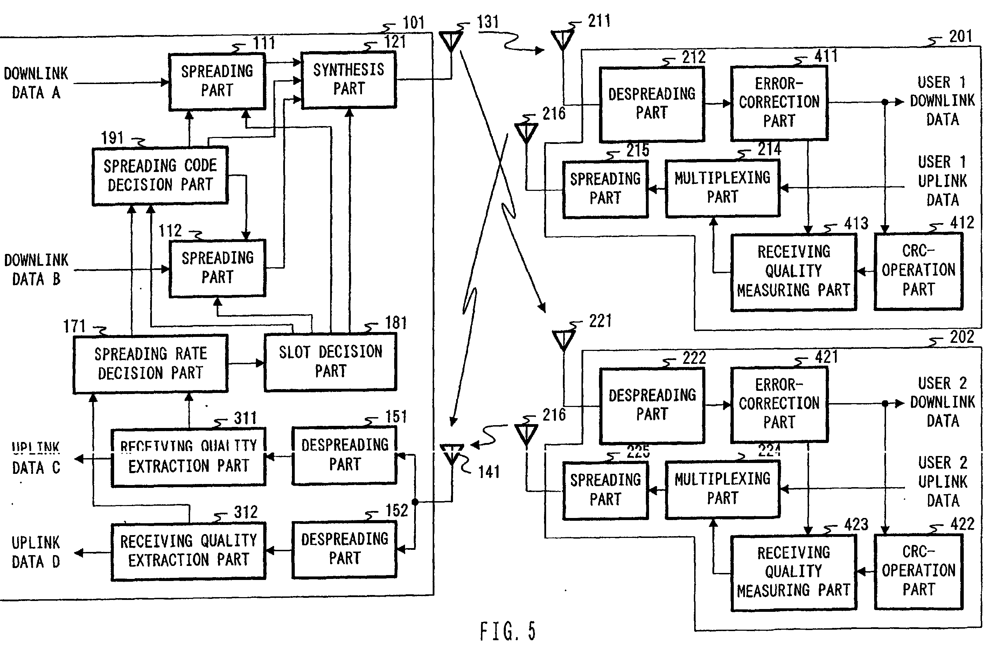

FIG. 5 shows block diagrams of configurations of a base station device and communication terminal devices according to the embodiment 2 of the present invention. Here, in FIG. 5, the same elements as those previously described with reference to FIG. 3 are denoted by the same reference numbers, and the description will be eliminated. The base station device shown in FIG. 5 comprises the same elements as those of the station device shown in FIG. 3, except added elements of receiving quality extraction parts 311, and 312 instead of eliminated ones of the path intensity extraction parts 161, and 162. And, the communication terminal devices shown in FIG. 5 comprise the same elements as those of the terminal devices shown in FIG. 3, except added elements of error-correction parts 411, and 421; CRC-operation parts 412, and 422; and receiving quality measuring parts 413, and 423; instead of the deleted ones of the path intensity measuring parts 213, and 223.

In the base station device 101, the despreading part 151 performs multiplication of a signal received at the receiving antenna 141 by a spreading code C for extraction of an uplink signal C and output of it to the receiving quality extraction part 311. The despreading part 152 performs multiplication of a signal received at the receiving antenna 141 by a spreading code D for extraction of an uplink signal D and output of it to the receiving quality extraction part 312.

The receiving quality extraction part 311 extracts information on the receiving quality carried on the uplink signal C output from the despreading part 151. The receiving quality extraction part 312 extracts information on the receiving quality carried on the uplink signal D output from the despreading part 152.

The spreading ratio decision part 171 decides a spreading ratio of a spreading code for multiplication of the downlink signal A, based on the information on the receiving quality output from the receiving quality extraction part 311, and determines a spreading ratio of a spreading code for multiplication of the downlink signal B, based on the information on the receiving quality output from the receiving quality extraction part 312.

In the communication terminal device 201, the despreading part 212 performs multiplication of a signal received at the receiving antenna 211 by the spreading code A for extraction of the uplink signal A and output of it to the error-correction part 411, which performs error-correction of the downlink signal A output from the despreading part 212.

The CRC-operation part 412 executes CRC-operation of the downlink signal A after completion of the error-correction. The receiving quality measuring part 413 measures the receiving quality of the signal, based on the error-correction results and the CRC-operation results. The multiplexing part 214 multiplexes the information on the receiving quality, which is output from the receiving quality measuring part 413, over the uplink signal C.

In the communication terminal device 202, the despreading part 222 performs multiplication of a signal received at the receiving antenna 221 by the spreading code B for extraction of the downlink signal B and output of it to the error-correction part 421, which performs error-correction of the downlink signal A output from the despreading part 222.

The CRC-operation part 422 executes CRC-operation of the downlink signal A after completion of the error-correction. The receiving quality measuring part 423 measures the receiving quality of the signal, based on the error-correction results and the CRC-operation results.

The multiplexing part 214 multiplexes the information on the receiving quality, which is output from the receiving quality measuring part 423, over the uplink signal C.

As mentioned above, the system capacity may be increased in the base station device, while necessary and sufficient receiving quality is kept, by decision of the spreading codes and time slots through reducing the spreading ratios to the very limit securing necessary receiving quality, based on the information on the path intensity transmitted from each communication device.

### (Embodiment 3)

In an embodiment 3, the base station device measures the receiving path intensity of the uplink signal, and decides the spreading ratio of the downlink signal and so on, based on the measured receiving path intensity, noting that the delay profile in the communication terminal device is almost similar to that of the base station device.

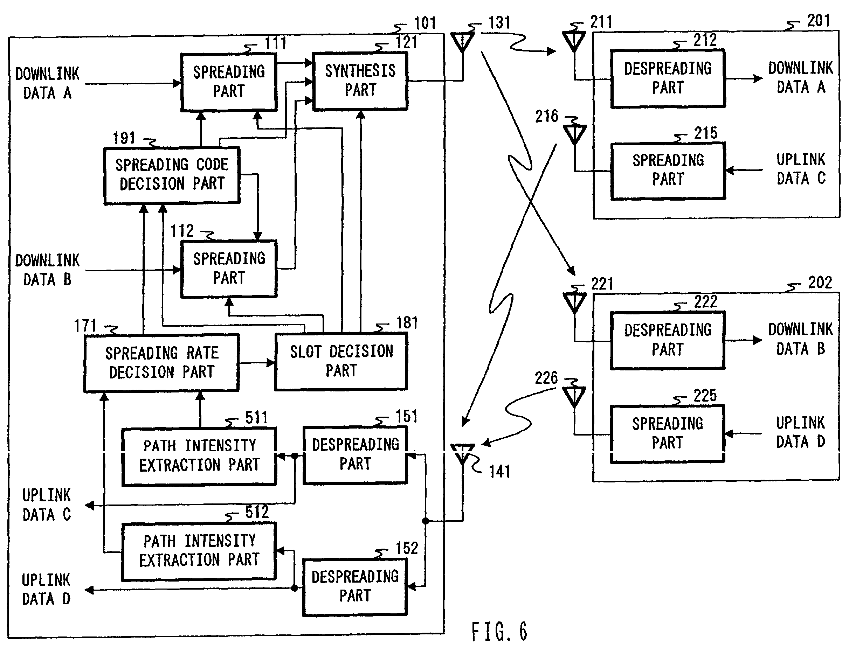

FIG. 6 is block diagrams of configurations of a base station device and communication terminal devices according to the embodiment 3 of the present invention. Here, in FIG. 6, the same elements as those previously described with reference to FIG. 3 are denoted by the same reference numbers, and the description will be eliminated. The base station device shown in FIG. 6 comprises the same elements as those of the station device in FIG. 3, except added elements of path intensity parts 511, and 512 instead of eliminated elements of the path intensity extraction parts 161, and 162. And, the communication terminal devices in FIG. 6 comprises the same elements as those of the terminal devices in FIG. 3, except the eliminated path intensity measuring parts 213, and 223.

In the base station device 101, the despreading part 151 performs multiplication of a signal received at the receiving antenna 141 by the spreading code C for extraction of the downlink signal C and output of it to the path intensity measuring part 511. And the despreading part 152 performs multiplication of a signal received at the receiving antenna 141 by the spreading code D for extraction of the uplink signal D, and output of it to the path intensity measuring part 512.

The path intensity measuring part 511 measures the receiving path intensity of the uplink signal C output from the despreading part 151. The path intensity measuring part 512 measures the receiving path intensity of the uplink signal D output from the despreading part 152.

The spreading ratio decision part 171 decides a spreading ratio of a spreading code for multiplication of the downlink signal A, based on the information on the receiving path intensity output from the path intensity measuring part 511, and determines a spreading ratio of a spreading code for multiplication of the downlink signal B, based on the information on the information on the receiving path intensity output from the path intensity measuring part 512.

The scale of the hardware or software for the communication terminal devices may be reduced to realize smaller dimensions and reduced electric power consumption in the communication terminal devices, by decision of the spreading codes, based on the receiving path intensity of the uplink signal measured at the base station device, as mentioned above.

### (Embodiment 4)

In an embodiment 4, the receiving quality is measured in the base station device, based on the bit error correction results and the CRC-operation ones, and a spreading ratio of a downlink signal and so on are decided, noting that the delay profile of a communication terminal device is almost the same as that of the base station device.

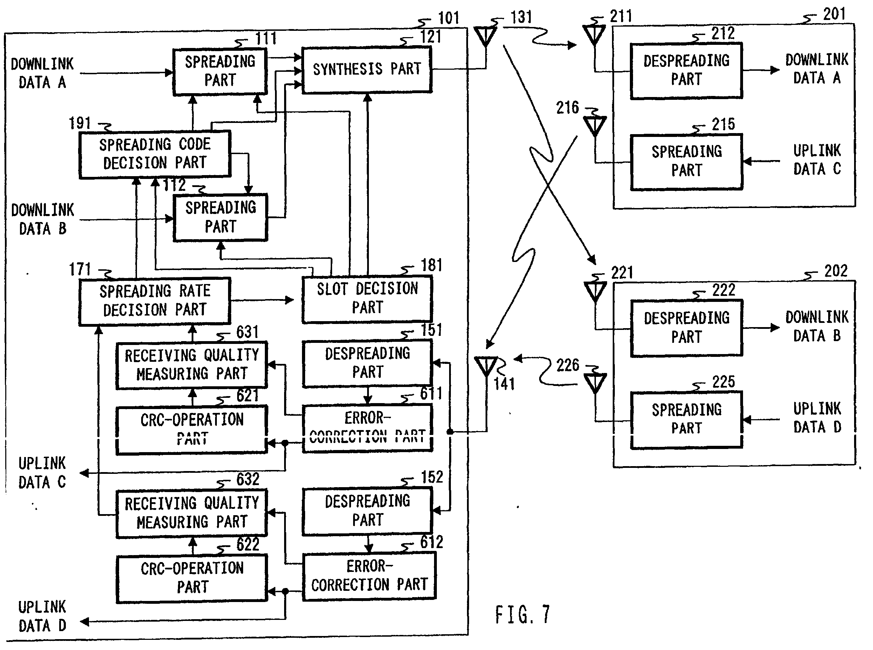

FIG. 7 shows block diagrams of configurations of a base station device and communication terminal devices according to an embodiment 4 of the present invention. Here, in FIG. 7, the same elements as those previously described with reference to FIG. 6 are denoted by the same reference numbers, and the description will be eliminated. The base station device shown in FIG. 7 comprises the same elements as those of the station device in FIG. 6, except added elements of error-correction parts 611, and 612; CRC-operation parts 621, and 622; and a receiving quality measuring parts 631, and 632, instead of deleted elements of the path intensity parts 511, and 512. Moreover, communication terminal devices shown in FIG. 7 have the similar configuration to that of the terminal devices in FIG. 6.

In the base station device 101, the despreading part 152 performs multiplication of a signal received at the receiving antenna 141 by the spreading code C for extraction of the uplink signal C, and output of it to the path intensity measuring part 611. And, the despreading part 152 performs multiplication of a signal received at the receiving antenna 141 by the spreading code D for extraction of an uplink signal D and output of it to the error-correction part 612.

The error-correction part 611 performs error-correction of an uplink signal C output from the despreading part 151. The error-correction part 612 performs error-correction of an uplink signal D output from the despreading part 152.

The CRC-operation part 621 performs CRC-operation of an uplink signal C after completion of the error-correction. The CRC-operation part 622 executes CRC-operation of an uplink signal D after completion of the error-correction.

The receiving quality measuring part 631 measures the receiving quality of an uplink signal C based on the error-correction results and the CRC-operation results. The receiving quality measuring part 632 measures the receiving quality of an uplink signal D based on the error-correction results and the CRC-operation results.

The spreading ratio decision part 171 decides a spreading ratio of a spreading code for multiplication of a downlink signal A, based on the information on the receiving quality output from the receiving quality measuring part 631, and determines a spreading ratio of a spreading code for multiplication of a downlink signal B, based on the information on the receiving quality output from the receiving quality measuring part 632.

The size in the hardware or software for the communication terminal devices may be reduced to realize smaller dimensions and reduced electric power consumption in the communication terminal devices, by decision of the spreading codes and so on, based on the receiving path intensity of the uplink signal measured at the base station device, as mentioned above.

As described above, according to a CDMA base station device and a CDMA communication method of the present invention, the channel capacity may be increased, while necessary and sufficient receiving quality is kept under controlled interference between users, by controlling a spreading ratio and a time slot of a spreading code, by which a downlink transmitting signal is multiplied, based on receiving path intensity of a downlink and so on.

This application is based on Japanese Patent Application No.HEI11-095029, filed April 1, 1999, the contents of which is incorporated herein by reference.

## Claims

1. A CDMA base station device comprising:
a spreading ratio decision means for deciding spreading ratios of each downlink signal, based on a propagation environment;
a time slot decision means for deciding time slots of each downlink signal, based on said decided spreading ratios; and
a spreading code decision means for deciding spreading codes of each downlink signal, based on said decided spreading ratios and time slots.

2. A CDMA base station device according to claim 1 comprising a path intensity extraction means for extracting information on receiving path intensity carried on an uplink signal, said spreading ratio decision means deciding spreading ratios of each downlink signal, based on said extracted information on the receiving path intensity.

3. A CDMA base station device according to claim 1 comprising a receiving quality extraction means for extracting information on receiving quality carried on an uplink signal, said spreading ratio decision means deciding spreading ratios of each downlink signal, based on said extracted information on the receiving quality.

4. A CDMA base station device according to claim 1 comprising a first path intensity measuring means for measuring the receiving path intensity of an uplink signal, said spreading ratio decision means deciding the spreading ratios of each downlink signal, based on said measured receiving path intensity.

5. A CDMA base station device according to claim 1 comprising a first error-correction means for performing error-correction of an uplink signal; a first CRC(cyclic redundancy check)-operation means for performing CRC-operation of an uplink signal; and a first receiving quality measuring means for measuring the receiving quality of an uplink signal, based on the error-correction results and the CRC results, said spreading ratio decision means deciding spreading ratios of each downlink signal, based on said measured receiving quality.

6. A CDMA communication terminal device comprising a second path intensity measuring means for measuring receiving path intensity of a downlink signal transmitted from a CDMA base station device according to claim 2, and a first multiplexing means for carrying said information on the receiving path intensity of said uplink signal on an uplink signal to be transmitted to a CDMA base station according to claim 2.

7. A CDMA communication terminal device comprising a second error-correction means for performing error-correction of a downlink signal transmitted from a CDMA base station device according to claim 3; a second CRC-operation means for performing CRC-operation of said downlink signal; a second receiving quality measuring means for measuring the receiving quality of said downlink signal, based on the error-correction results and the CRC operation results; and a second multiplexing means for carrying said information on the receiving quality of said downlink signal on an uplink signal to be transmitted to a CDMA base station device according to claim 3.

8. A CDMA communication method to decide the number of time slots corresponding to the length of a spreading code, based on a propagation environment; decide a spreading code, based on said decided number of time slots; and assign said spreading code to each user.

9. A CDMA communication method, wherein a communication terminal device measures the receiving path intensity of an downlink signal; and carries information on said receiving path intensity on an uplink signal; and a base station device extracts said information on the receiving path intensity carried on said uplink signal; decides the spreading ratios of each downlink signal, based on said extracted receiving path intensity; and decides time slots and spreading codes of each downlink signal, based on said decided spreading ratios.

10. A CDMA communication method, wherein a communication terminal device measures the receiving quality of an downlink signal, based on error-correction results and CRC-operation results of an downlink signal; and carries information on said receiving quality on an uplink signal; and a base station device extracts said information on the receiving quality carried on said uplink signal; decides the spreading ratios of each downlink signal, based on said extracted information on the receiving quality; and decides time slots and spreading codes of each downlink signal, based on said decided spreading ratios.

11. A CDMA communication method, wherein a base station device measures the receiving path intensity of an uplink signal; decides spreading ratios of each downlink signal, based on said measured receiving path intensity; and decides time slots and spreading codes of each downlink signal, based on said decided spreading ratios. 12. A CDMA communication method, wherein a base station device measures the receiving quality of an downlink signal, based on error-correction results and CRC-operation results of an uplink signal; decides the spreading ratios of each downlink signal, based on said measured receiving quality; and decides time slots and spreading codes of each downlink signal, based on said decided spreading ratios.
